# EUROPEAN PATENT APPLICATION

(11) **EP 1 083 725 A1**
(43) Date of publication of application: **14.03.2001**
(21) Application number: 99610050.9
(22) Date of filing: 07.09.1999
(51) Int. Cl.: H04M 1/02

(54) **Release mechanism for a locking hinge for a foldable phone handset**

(71) Applicant: TELEFONAKTIEBOLAGET LM ERICSSON, 126 25 Stockholm (SE)
(72) Inventor: Brännmo, Henrik, 245 92 Staffanstorp (SE)
(74) Representative: Boesen, Johnny Peder

(57) **Abstract**

The invention relates to a hinge-controlling mechanism for controlling locking and releasing of a cover connected to a casing, e.g. a mobile telephone. The hinge-controlling mechanism comprising a plunger with a cam at one end thereof and a cam element with a complimentary cam facing the cam of the plunger. One of the plunger and cam element is connected non-rotatably to the casing and the other one to the cover, and the plunger and cam element are rotatably mounted in relation to each other. The mechanism further comprises a spring element biasing the plunger against the cam element. A locking element is mounted slidably in relation to the cam element, and the locking element is in engagement with the cam of the plunger, when the controlling mechanism is in its locking position. A release button is provided for releasing the locking element from its engagement with the cam of the plunger.

## Description

The invention relates to an improved hinge-controlling mechanism for controlling locking and releasing of a cover hingedly connected to a casing, said hinge-controlling mechanism comprising a plunger with a cam at one end thereof and a cam element with a cam facing the cam of the plunger, one of the plunger and cam element being connected non-rotatably to the casing and the other one to the cover, said plunger and cam element being rotatably mounted in relation to each other, and furthermore comprising a spring element biasing the plunger against the cam element. The invention also relates to an electronic device such as a mobile telephone having such a mechanism.

In order to save space and to reduce the size of electronic equipment, many electronic devices are today provided with a cover often provided with some technical features such as a microphone etc. Such covers are especially known from mobile radio stations such as mobile telephones where a part of the front is hingedly connected to the casing of the phone. In its closed position, this part - the cover - often covers and thereby protects the keypad of the phone, and the cover itself may contain a microphone or sound channel leading from an aperture to a microphone.

There are two common ways to control the position of the cover. A first way is to provide the cover with a prebiased spring mechanism at the pivot point, said spring mechanism endeavouring to keep the cover in its open position. The phone therefore has to be provided with a separate locking mechanism in order to keep the cover in its closed position.

Another way to control the cover is to provide the cover with a springbiased plunger with a V-shaped cam at the pivot point, said plunger forcing the cover either to be in its opened position or in its closed position depending on the rotational position of the cam of the plunger in relation to a complimentary V-shaped cam connected to the casing of the phone. The cover must be opened manually and the springbiased plunger forces the cover to open when the plunger passes its neutral position approximately halfways between the closed and the opened positions. The cover must be closed manually as well and is forced to its closed position when the plunger again passes its neutral position. Such a mechanism is known from e.g. JP 10252739.

The latter type of control mechanism has a number of advantages over the first-mentioned type. It can be made without any parts of the plunger mechanism being visible because all the technical features can be positioned inside the hinge between the cover and the casing which is not possible for the first type of control mechanism. Furthermore, the keypad of the phone is better protected by the cover because it is forced against the front of the phone by the plunger mechanism.

However, a disadvantage of this known type of hinge-controlling mechanism is that the cover has to be opened manually. This means that the body of the phone or the cover has to be provided with fingergrips which in many cases blemishes the design of the phone. Furthermore, it is most conveniently to use two hands when opening the cover, one hand holding the casing of the phone and the other hand gripping the cover to open it.

The object of the present invention is to overcome these disadvantages of the known types of hinge-controlling mechanisms, thereby providing a hinge-controlling mechanism which ensures that the cover is forced against the front of the casing when the cover is in its closed position and which furthermore makes it possible to open the cover by means of a release button.

This object is achieved by providing the mechanism mentioned in the opening paragraph with a locking element mounted slidably in relation to the cam element, said locking element being in engagement with the cam of the plunger, when the controlling mechanism is in its locking position, and a release button for releasing the locking element from its engagement with the cam of the plunger for opening of the cover.

By pressing the release button of this mechanism, the locking engagement between the cam of the plunger and the locking element is released, and the cover is free to open. Due to the shapes of the cam of the plunger and of the cam of the cam element and to the action of the spring force, the cover opens quickly.

In a preferred embodiment the locking element has an end part from which two arms extend in the same direction, and the cam element has two grooves extending in the axial direction for receiving the arms of the locking element. When the hinge-controlling mechanism is in its locking position, the ends of the arms are in engagement with the cam of the plunger. This arrangement leads to a very compact structure that can easily be built into a hinge.

The shape of the cams of the plunger and of the cam element may be complementary whereby a relatively large contact area between the two is obtained. Preferably the plunger and the cam element each has a circular cross-section and each of their respective cams has in broad outline the shape of two helical faces, each covering approximately half the cross-section. Hereby is obtained that the plunger is able to rotate up to 180° and to have two end stops thereby making the mechanism more stable in its opened position.

Each of the helical faces of the cam of the plunger is preferably provided with a notch for receiving the end of the arms of the locking element when the hinge-controlling mechanism is in its opened position. Hereby the locking element is able to return to its locking position immediately after opening of the cover, and the engagement between the arms of the locking element and the notches provided in the cam of the plunger helps keeping the cover in its opened position, thus providing a distinct opened position of the cover.

In a preferred embodiment the plunger is slidably mounted on a non-circular shaft which is connected to the cover, while the cam element is firmly mounted in the casing. This makes it possible to use only a few parts in the mechanism and thereby to accomplish a simple structure.

By using a helical spring and placing it between the end of the plunger opposite the cam and a collar provided on the non-circular shaft, a very simple structure using only a few parts is obtained.

The release button is preferably arranged slidably in a transverse direction in relation to the plunger and cam element, and it comprises a protrusion which is in engagement with the end part of the locking element when the hinge-controlling mechanism is in its locking position. Thereby the locking element is locked in engagement with the plunger in a very simple manner.

The release button may also be provided with a spring acting against the movement for releasing the hinge-controlling mechanism and inclined wall parts at the protrusions. This causes the release button to return to the initial locking position automatically, when the cover is opened.

In order not to have any forces acting on the casing of the electronic device or on the cover, all the parts in the hinge-controlling mechanism may be constructed as a rigid unit incorporated in the casing.

The hinge-controlling mechanism may be used in a wide variety of different equipment, but in a preferred embodiment the equipment is a mobile radio station such as a mobile telephone.

The invention will be described in details in the following with reference to the drawings in which
Fig. 1 shows a casing of a mobile telephone provided with a cover in its closed position and comprising a preferred embodiment of a hinge-controlling mechanism according to the invention,
Fig. 2 shows a casing of a mobile telephone provided with a cover in its opened position,
Fig. 3 is an exploded view of the parts of the hinge-controlling mechanism in a preferred embodiment,
Fig. 4 shows the assembled hinge-controlling mechanism,
Figs. 5-9 show the hinge-controlling mechanism in five different positions, and
Figs. 10 and 11 show two alternative embodiments of a hinge-controlling mechanism according to the invention.

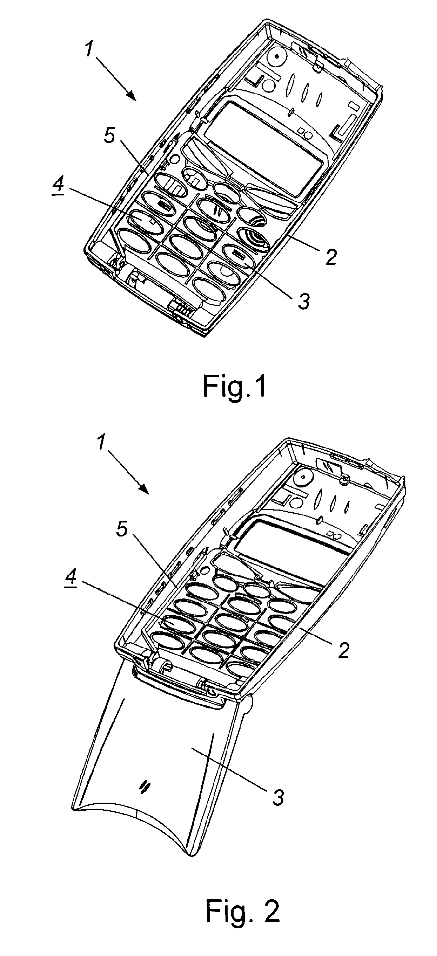

Fig. 1 shows the front part of a mobile telephone 1 consisting of a casing 2 provided with a cover 3 which can be seen through the apertures 4 in the casing 2. The cover 3 is shown in its closed position in which the cover 3 presses against the front part of the telephone 1 due to the resulting forces of the spring in the hinge-controlling mechanism as described later. The telephone is provided with a release button 5, and by pushing this release button 5 downwards the hinge-controlling mechanism is released and the cover 3 will open.

Fig. 2 shows the casing 2 of a mobile telephone 1 with a cover 3 in its opened position after the release button 5 has been pushed downwards. Since the cover 3 opens automatically when the release button 5 is pushed downwards, the telephone 1 can be operated by one hand only.

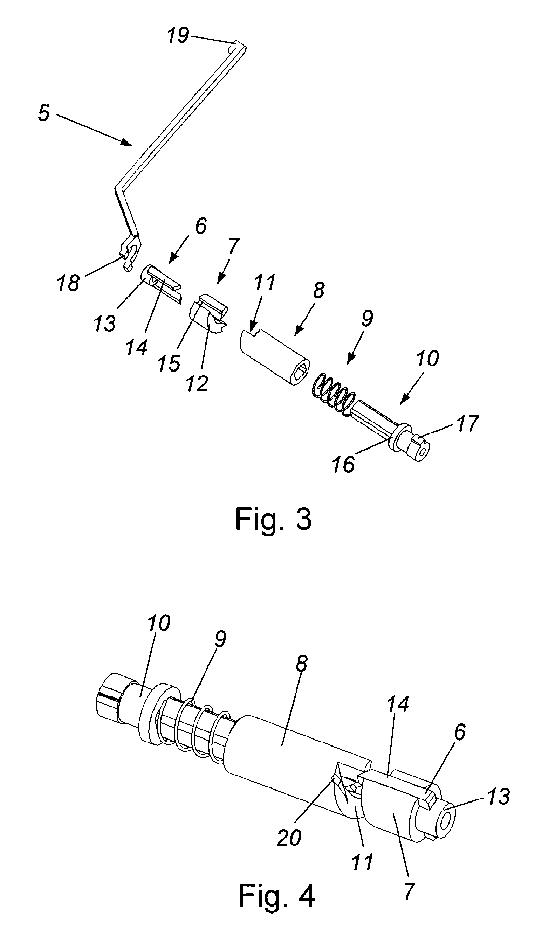

In Fig. 3 is shown an exploded view of the parts that constitute the hinge-controlling mechanism in a preferred embodiment of the invention. The hinge-controlling mechanism comprises a release button 5, a locking element 6, a cam element 7, a plunger 8, a helical spring 9, and a shaft 10.

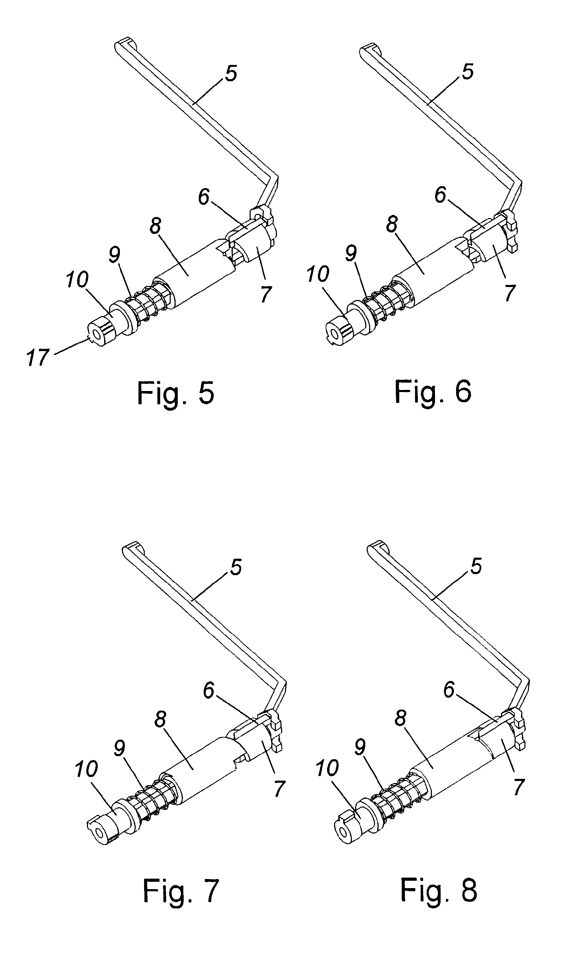

The plunger 8 and the cam element 7 each has a cam face 11 and 12, respectively, facing each other. In the broad outline, each of the cam faces 11, 12 preferably has the shape of two helical faces, each covering approximately half the cross-section of the plunger 8 and cam element 7. This means in turn that each of the cam faces also has two approximately flat faces in the axial direction of the plunger and cam element. These flat faces serve as stops when the hinge-controlling mechanism is released and they therefore determine how far the cover 3 can open. This will be described later with reference to Figs. 5-9.

Due to the shape of the cams of the plunger 8 and cam element 7, each cam also has two sharp edges where the helical faces 11, 12 end. These sharp edges on the plunger 8 are in engagement with the locking element 6 when the hinge-controlling mechanism is in its locking position. This will be described later.

The locking element 6 consists of an end part 13 and two parallel extending arms 14 with a sharp edge at the free end. The arms 14 can be slidably received in two grooves 15 provided in the cam element 7. The depth of these grooves 15 is smaller than the wall thickness of the cam element 7 which means that the helical faces 12 at least partly covers half the cross-section of the cam element as seen in Fig. 3.

The plunger 8 has a central opening with a non-circular cross-section and the shaft 10 has a cross-section corresponding to this opening. When assembled the plunger 8 can slide axially on the shaft 10 but can not rotate in relation to the shaft 10. The shaft 10 is provided with a collar 16 that can support the helical spring 9 when the mechanism is assembled. The shaft 10 is furthermore provided with a cam 17 that is in engagement with the cover 3 when the hinge-controlling mechanism is mounted in the mobile telephone 1.

The release button 5 is provided with two protrusions 18 which in the locking and in the opened position keep the locking element 6 in its foremost position as described later. The protrusions 18 have inclined wall parts and the function of these will be described later. At the upper end of the release button 5 a protrusion 19 is provided which in the assembled state extends beyond the telephone 1 and can be operated, i.e. pushed downwards, by the user of the telephone thereby causing the cover to open.

The hinge-controlling mechanism is seen in its assembled state in Fig. 4. The mechanism is shown in its locking position where the locking element 6 is kept in its foremost position by the release button (not shown). The helical spring 9, which is in a compressed state, forces the plunger against the cam element 7. The helical faces 11, 12 of the plunger 8 and cam element 7 make it possible for these two parts to rotate in relation to each other with a simultaneous displacement of the plunger 8. However, since the locking element 6 is maintained in its foremost position, this rotation is prevented by the engagement between the sharp edges of the plunger 8 and the end of the arms 14 of the locking element 6.

The outer edge of each of the arms 14 of the locking element 6 is angled in such a way that the engagement between this outer edge and the sharp edge of the cam of the plunger 8 endeavours to rotate the plunger 8 counterclockwise, i.e. in a direction that endeavours to close the cover 3 even more. This means that the cover 3 is forced against the front of the casing when it is in its closed and locked position.

A notch 20 is provided in each surface of the cam of the plunger 8. These notches can receive the end of the arms 14 of the locking element 6 when the hinge controlling mechanism is in its opened position. This will be described later.

When the mechanism is to be released, the release button 5 is pushed downwards by means of the protrusion 19. Hereby the protrusions 18 are released from their engagement with the end part 13 of the locking element 6 which in turn is pushed backwards by the plunger 8 due to the spring force of the spring 9. Since the grooves 15 for the arms 14 of the locking element 6 in the cam element 7 have a depth that is smaller than the wall thickness of the cam element, the helical faces 11 of the plunger 8 get in contact with the corresponding faces 12 of the cam element 7. This accomplishes that the spring force now endeavours to rotate the plunger 8 clock-wise, i.e. in the direction that endeavours to open the cover 3. By providing the outer edge of the arms with an angle as shown, it is possible for the plunger 8 to push the locking element 6 further backwards while it rotates.

This operation is seen in full in Figs. 5-9. The cam element 7 is fixed in the mobile telephone 1 while the locking element 6 and the release button 5 is slidably mounted. The plunger 8 is slidably mounted on the shaft 10 which in turn is connected to the cover 3 via the cam 17.

In Fig. 5 the hinge-controlling mechanism is seen in its locking position. This corresponds to the situation shown in Fig. 4 as described above.

In Fig. 6, the release button 5 has just been pushed downwards allowing the locking element 6 to slide backwards in the grooves 15 in the cam element 7. The spring force from the spring 9 biases the plunger 8 forwards and this movement causes the plunger 8 to rotate while it simultanously forces the locking element 6 backwards as explained above.

In Fig. 7, the cover 3 is partly open and now the spring 9 only forces the plunger 8 further forwards while still rotating.

In Fig. 8, the plunger 8 has reached its maximum displacement and rotation. The flat faces of the cams of the plunger 8 and the cam element 7 are now in full engagement, thereby preventing any further opening of the cover 3.

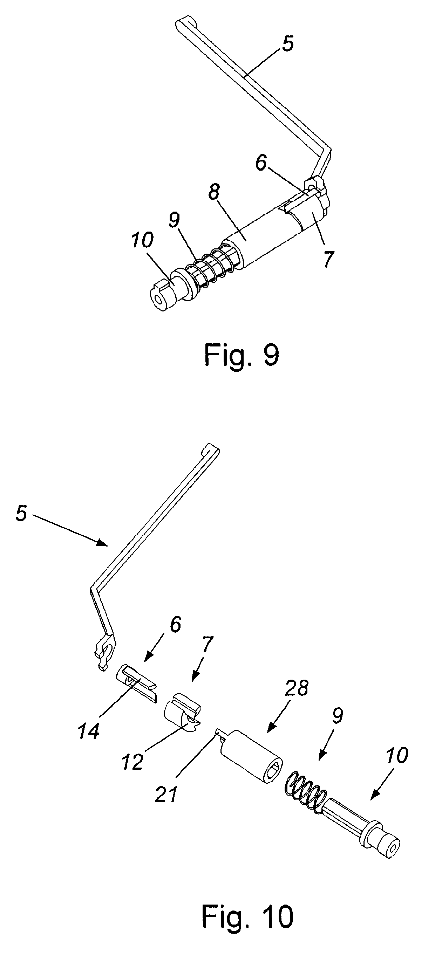

The release button 5 is preferably provided with a spring (not shown) endeavouring to move the release button 5 upwards. Because of the notches 20 provided in the cam surface of the plunger 8, the locking element 6 is able to return to its locking position, and due to the above-mentioned spring and the inclined wall parts of the protrusions 18 of the release button 5, the locking element 6 is forced forwards by the returning release button 5. This situation is shown in Fig. 9.

Closing of the cover 3 is accomplished manually by gripping the cover 3 and forcing it against the spring force provided by the spring 9 in the hinge-controlling mechanism. Due to the forward position of the locking element 6 with the ends of the arms 14 received in the notches 20, a certain force is needed to start the rotation of the plunger 8. During the rotation, the helical faces 11 of the cam of the plunger 8 cooperate with end of the arms 14 of the locking element 6, thereby forcing the plunger 8 backwards.

When the sharp edges of the helical faces 11 pass the outer edge of the arms 14 of the locking element 6, the plunger 8 is forced forwards again by the spring 9 into the locking position of the hinge-controlling mechanism.

As mentioned, the outer edge of each of the arms 14 of the locking element 6 is angled in such a way that the engagement between this outer edge and the sharp edge of the cam of the plunger 8 endeavours to rotate the plunger 8 counter-clockwise, i.e. in the direction that endeavours to close the cover 3 even more. This means that the cover 3 is forced against the front of the casing when it is in its closed and locked position.

The angling of the outer edge of each of the arms 14 of the locking element 6 also has a function as overload protection. If the cover 3 in its closed and locked position is gripped and forced to be opened, the sharp edges of the helical faces 11 of the plunger 8 will slide on the angled outer edge of each of the arms 14 of the locking element 6, thereby displacing the plunger 8 backwards, until the sharp edges of the helical faces pass the outer edge of the arms 14 of the locking element 6. From this point, the outer edge of each of the arms 14 of the locking element 6 is in engagement with the helical faces 11 of the plunger 8 and due to the spring force from the spring 9 biasing the plunger 8, the cover 3 opens.

The shapes of the cams of the cam element 7 and the plunger 8 do not have to be complementary as shown in the embodiment shown in Figs. 1-9.

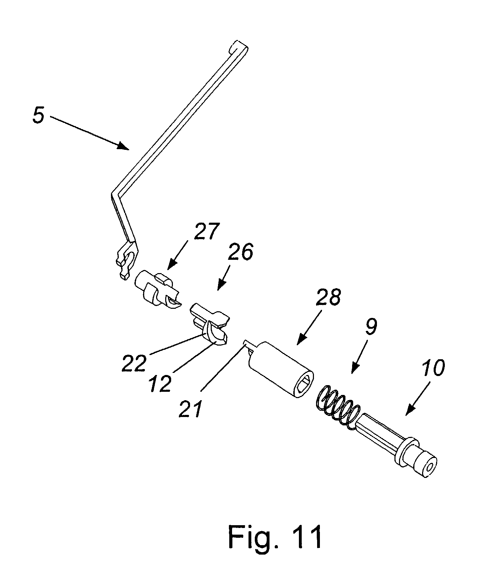

Fig. 10 and 11 show two alternative embodiments of a hinge-controlling mechanism according to the invention.

In the embodiment shown in Fig. 10 the cam of the plunger 28 has been reduced to two forwardly extending cam parts 21, each having a foremost face that cooperates with the helical face 12 of the cam element 7. In operation, the cam parts 21 have exactly the same function as the cam face 11 of the plunger 8 according to the above-described embodiment, i.e. in engagement with the end of the arms 14 of the locking element 6 when the hinge-controlling mechanism is in its locking position, and in rotatable engagement with the cam face 12 of the cam element 7 when the release button 5 is pushed downwards for opening of the cover 3.

This embodiment shows that the cams of the plunger 8 and of the cam element 7 do not have to be complementary in shape in order to work in the prescribed manner.

Fig. 11 shows a third embodiment of a hinge-controlling mechanism according to the invention. In this embodiment the plunger 28 is identical to the plunger 28 shown in Fig. 10. However, the cam element 27 and the locking element 26 are somewhat different from the cam element 7 and locking element 6 of the first and second embodiments, though in operation these parts work in a similar manner. A plunger identical to the plunger 8 shown in Figs. 1-9 could also be used in this embodiment.

In the embodiment shown in Fig. 11 the locking element 26 is provided with an outer ring 22 provided with forwardly extending parts that engage with the cam parts 21 of the plunger 28 when the hinge-controlling mechanism is in its locking position. Furthermore, the locking element 26 is provided with helical faces that correspond to the helical faces 12 of the cam element 27. The cam element 27 generally has a reduced diameter in order to make room for the ring-shaped locking element 27. However, the helical faces that engage with the cam parts 21 of the plunger 28 have been maintained since they ensures that the plunger 28 rotates when the locking engagement between the cam parts 21 of the plunger 28 and locking element 26 is released by when the release button 5 is pushed downwards.

Other embodiments of the invention may be provided and the described embodiments are not intended to limit the scope of the annexed claims.

Furthermore, it shall be emphasized that the term "comprise/comprising" when used in this specification is taken to specify the presence of stated features, integers, steps or components but does not preclude the presence or addition of one or more other features, integers, steps components or groups thereof.

## Claims

1. A hinge-controlling mechanism for controlling locking and releasing of a cover (3) hingedly connected to a casing (2), said hinge-controlling mechanism comprising a plunger (8) with a cam at one end thereof and a cam element (7) with a cam facing the cam of the plunger (8), one of the plunger (8) and cam element (7) being connected non-rotatably to the casing (2) and the other one to the cover (3), said plunger (8) and cam element (7) being rotatably mounted in relation to each other, and furthermore comprising a spring element (9) biasing the plunger (8) against the cam element (7), **characterised in** that the hinge-controlling mechanism further comprises a locking element (6) mounted slidably in relation to the cam element (7), said locking element (6) being in engagement with the cam of the plunger (8), when the controlling mechanism is in its locking position, and a release button (5) for releasing the locking element (6) from its engagement with the cam of the plunger (8) for opening of the cover (3).

2. A hinge-controlling mechanism according to claim 1, **characterised in** that the locking element (6) has an end part (13) from which two arms (14) extend in the same direction, and that the cam element (7) has two grooves (15) extending in the axial direction for receiving the arms (14) of the locking element (6), the ends of the arms (14) being in engagement with the cam of the plunger (8) when the hinge-controlling mechanism is in its locking position.

3. A hinge-controlling mechanism according to claims 1 or 2, **characterised in** that the cam of the cam element (7) has a shape complementary to the shape of the cam of the plunger (8).

4. A hinge-controlling mechanism according to claim 3, **characterised in** that the plunger (8) and the cam element (7) each has a circular cross-section and that each of their respective cams in broad outline has a shape of two helical faces (11; 12), each covering approximately half the cross-section.

5. A hinge-controlling mechanism according to claim 4, **characterised in** that each of the helical faces (11) of the cam of the plunger (8) is provided with a notch (20) for receiving the end of the arms (14) of the locking element (6) when the hinge-controlling mechanism is in its opened position.

6. A hinge-controlling mechanism according to any one of claims 1-5, **characterised in** that the plunger (8) is able to rotate up to 180° in relation to the cam element (7).

7. A hinge-controlling mechanism according to any one of claims 1-6, **characterised in** that the plunger (8) is slidably and non-rotatably mounted on a shaft (10) which is connected to the cover (3), and that the cam element (7) is firmly mounted in the casing (2).

8. A hinge-controlling mechanism according to claim 7, **characterised in** that the shaft (10) is non-circular.

9. A hinge-controlling mechanism according to claims 7 or 8, **characterised in** that the spring element (9) consists of a helical spring positioned between the end of the plunger (8) opposite the cam and a collar (16) provided on the shaft (10).

10. A hinge-controlling mechanism according to any one of claims 2-9, **characterised in** that the release button (5) is arranged slidably in a transverse direction in relation to the plunger (8) and cam element (7), and that it comprises a protrusion (18) which is in engagement with the end part (13) of the locking element (6) when the hinge-controlling mechanism is in its locking position.

11. A hinge-controlling mechanism according to claim 10, **characterised in** that the release button (5) is provided with a spring acting against the movement for releasing the hinge-controlling mechanism, and that the protrusions (18) are provided with inclined wall parts.

12. A hinge-controlling mechanism according to any one of claims 1-11, **characterised in** that the hinge-controlling mechanism is constructed as a rigid unit incorporated in the casing (2).

13. A hinge-controlling mechanism according to any one of claims 1-12, **characterised in** that the casing (2) is the body of a mobile radio station, such as a mobile telephone (1).

14. An electronic equipment with a cover (3) connected to the body of the electronic equipment by a hinge, **characterised in** that the electronic equipment comprises a hinge-controlling mechanism according to one of claims 1-13.

15. An electronic equipment according to claim 14, **characterised in** that it is a mobile radio station, such as a mobile telephone (1).
